# EUROPÄISCHE PATENTANMELDUNG

(11) **EP 1 516 796 A2**
(43) Veröffentlichungstag der Anmeldung: **23.03.2005**
(21) Anmeldenummer: 04020683.1
(22) Anmeldetag: 31.08.2004
(51) Int. Cl.: B62B 3/06

(54) **Flurförderzeug mit einem elektrischen Antrieb**

(30) Priorität: 19.09.2003 DE 10344091
(71) Anmelder: STILL S.A.R.L., 77107 Meaux Cedex (FR)
(72) Erfinder: Brouart, Francois, 60280 Margny les compiegne (FR); Ferreira, Paulo, 60870 Rieux (FR); Krupka, Daniel, 60170 Cambronne (FR)
(74) Vertreter: Lang, Michael

(57) **Zusammenfassung**

Die Erfindung betrifft ein Flurförderzeug mit mindestens einem elektrischen Antrieb, mindestens einer elektrischen Antriebssteuerung und einem Mittel zur Erfassung der Geschwindigkeit des Antriebs. Erfindungsgemäß ist eine Vorrichtung (20) zum Vergleich zwischen mindestens einem berechneten und mindestens einem gemessenen Geschwindigkeitswert des Antriebs (13) und/oder einer von dem Antrieb (13) bewegten Komponente vorgesehen.

## Beschreibung

Die Erfindung betrifft ein Flurförderzeug mit mindestens einem elektrischen Antrieb, mindestens einer elektrischen Antriebssteuerung und einem Mittel zur Erfassung der Geschwindigkeit des Antriebs. Elektrische Antriebe werden in Flurförderzeugen für vielfältige Aufgaben eingesetzt, beispielsweise als Fahrantrieb oder als Antrieb für Hydraulikaggregate. Die Geschwindigkeit des Antriebs wird mit dafür vorgesehenen Mitteln erfasst und beispielsweise der Bedienperson durch geeignete Vorrichtugnen angezeigt. Mittels der elektrischen Steuerung werden die Ströme und Spannungen zur Versorgung des Antriebs so vorgegeben, dass dieser die gewünschte Drehzahl und Leistung erbringt. In modernen Steuerungen sind dazu Berechnungsmodelle impliziert, in denen der Zusammenhang zwischen den elektrischen Eingangswerten und der Motordrehzahl abgebildet ist. Diese Modelle berücksichtigen jedoch immer nur den Idealzustand der Antriebsanlage und können daher beispielsweise bei bestimmten Betriebszuständen oder bei durch Alterung und Abnutzung von Komponenten bedingten Abweichungen vom Idealzustand zur Vorgabe falscher Eingangswerte des elektrischen Antriebs führen. Insbesondere wenn in der Kraftübertragungsreihe des elektrischen Antriebs Schlupf auftritt, beispielsweise bei einem Reibrad- oder Riemenantrieb oder zwischen einem Antriebsrad und der Fahrbahn, unterscheidet sich die tatsächliche Geschwindigkeit der betreffenden Funktion erheblich von den Vorgaben durch die Steuerung. Dadurch wird der Antrieb häufig unbemerkt schneller oder langsamer betrieben als eigentlich gewünscht. Dies kann zu erhöhtem Verschleiß von Komponenten, einem Sicherheitsrisiko oder der Verminderung der Produktivität des Flurförderzeugs führen.

Der Erfindung liegt daher die Aufgabe zugrunde, ein Flurförderzeug mit mindestens einem elektrischen Antrieb, mindestens einer elektrischen Antriebssteuerung und einem Mittel zur Erfassung der Geschwindigkeit des Antriebs zu schaffen, bei dem zu erhöhtem Verschleiß von Komponenten, einem Sicherheitsrisiko oder der Verminderung der Produktivität des Flurförderzeugs führende Umstände erfassbar sind.

Diese Aufgabe wird erfindungsgemäß dadurch gelöst, dass eine Vorrichtung zum Vergleich zwischen mindestens einem berechneten und mindestens einem gemessenen Geschwindigkeitswert des Antriebs vorgesehen ist. Der Vergleich von berechneten und tatsächlichen Geschwindigkeiten gibt ein Maß dafür, wie sehr der augenblickliche Zustand des Flurförderzeugs vom Idealzustand abweicht und ermöglicht festzustellen, ob ein für Verschleiß, Sicherheit oder Produktivität kritischer Zustand vorliegt und ob entsprechende Gegenmaßnahmen einzuleiten sind.

Es ist von besonderem Vorteil, wenn die Vorrichtung zum Vergleich zwischen einer berechneten und einer mit dem Mittel zur Erfassung der Geschwindigkeit gemessenen Geschwindigkeit des elektrischen Antriebs als von der elektrischen Antriebssteuerung unabhängiges Bauteil ausgebildet ist. Die Berechnung der Geschwindigkeit erfolgt damit in zwei voneinander unabhängigen Komponenten. Dadurch ist eine gegenseitige Überwachung der Komponenten möglich, was einen Sicherheitsgewinn ergibt. Auch ist es möglich, die Vorrichtung nachträglich anzubringen oder auszutauschen.

Es ist zweckmäßig, wenn die Geschwindigkeit des elektrischen Antriebs aus den Eingangsströmen und Eingangsspannungen des elektrischen Antriebs berechnet wird. Für den Betrieb des elektrischen Antriebs und zur Berechnung seiner Drehzahl sind im Wesentlichen diese Größen relevant und werden von der elektrischen Antriebssteuerung vorgegeben.

In einer zweckmäßigen Ausbildung der Erfindung sind Mittel zur Erfassung der Eingangsströme und Eingangsspannungen des elektrischen Antriebs vorhanden. Dadurch ist eine genaue Bestimmung dieser Größen möglich und es kann ein möglicher Unterschied zwischen den von der elektrischen Antriebssteuerung vorgegebenen und den tatsächlichen Werten detektiert werden.

Es ist weiterhin zweckmäßig, wenn von der Vorrichtung zum Vergleich zwischen mindestens einem berechneten und mindestens einem gemessenen Geschwindigkeitswert des Antriebs ein Vergleich von mindestens einem berechneten und/oder mindestens einem gemessenen Geschwindigkeitswert mit mindestens einem durch Bedienelemente vorgegebenen Geschwindigkeitswert des Antriebs vornehmbar ist. Dadurch kann die Umsetzung der vorgegebenen Fahrbefehle überprüft werden und bei einer Fehlfunktion das Auffinden der Ursache erleichtert werden.

Es ist von Vorteil, wenn Daten über die Differenz zwischen berechneter, gemessenen und vorgegebenen Geschwindigkeiten an andere Komponenten des Flurförderzeugs, vorzugsweise über ein Netzwerk- oder Bus-System, übermittelbar sind. Diese Daten können in den anderen Komponenten verarbeitet und gespeichert werden. Auch können insbesondere bei großen Differenzen geeignete Maßnahmen zu deren Reduzierung vorgenommen werden.

Es ist besonders vorteilhaft, wenn bei Überschreiten einer vorgegebenen Differenz zwischen mindestens zwei von der Vorrichtung zum Vergleich zwischen mindestens einem berechneten und mindestens einem gemessenen Geschwindigkeitswert des Antriebs erfassten Geschwindigkeiten geeignete Maßnahmen, insbesondere eine Reduzierung der Drehzahl des elektrischen Antriebs, zur Verringerung dieser Differenz durchführbar sind. Dadurch werden die negativen Auswirkungen der Differenz zwischen gewünschter und realer Geschwindigkeit minimiert und beispielsweise übermäßiger Verschleiß vermieden.

Besonders vorteilhaft ist es weiterhin, wenn bei einer für die Sicherheit des Flurförderzeugs kritischen Differenz zwischen den erfassten Geschwindigkeiten geeignete Maßnahmen, insbesondere Wamhinweise oder eine Reduzierung der Antriebsleistung, zur Wiederherstellung der Sicherheit durchführbar sind. Dadurch wird eine von dem Flurförderzeug ausgehende Gefährdung vermieden.

Zweckmäßigerweise ist der elektrische Antrieb ein Fahrantrieb. Bei Fahrantrieben kann aufgrund des Schlupfs zwischen Antriebsrad und Fahrbahn besonders häufig eine Differenz zwischen vorgegebener und gemessener Geschwindigkeit auftreten. Der dabei auftretende erhöhte Abrieb des Antriebsrads verschmutzt die Fahrbahn und macht einen vorzeitigen Austausch des Rades nötig. Durch reduzierten Schlupf verringert sich der Verschleiß des Antriebsrades und dieses kann später getauscht werden, was die Stillstandszeit des Flurförderzeugs reduziert und die Produktivität erhöht.

Als Mittel zur Erfassung der Geschwindigkeit des Antriebs sind neben direkt am Antrieb angebrachten Vorrichtungen zur Drehzahlmessung auch weitere dazu geeignete Mittel zu betrachten, insbesondere auch solche, die zur Erfassung der Geschwindigkeit einer vom Antrieb bewegten Komponente vorgesehen sind. Diese Mittel müssen nicht unbedingt mit dem Antriebsstrang in Verbindung stehen. Beispiele dafür wären berührungslos arbeitende Sensoren zur Erfassung von Hubhöhe und Hubgeschwindigkeit eines Lastaufnahmemittels oder an einem nicht angetriebenen Laufrad angebrachte Sensoren zur Erfassung der Fahrgeschwindigkeit des Flurförderzeugs.

Weitere Vorteile und Einzelheiten der Erfindung werden anhand des in den schematischen Figuren dargestellten Ausführungsbeispiels näher erläutert. Dabei zeigt
- Figur 1: einen Niederhubkommisonierer mit einer Deichsel als Beispiel für ein erfindungsgemäßes Flurförderzeug in Seitenansicht,
- Figur 2: ein Schema der Verkabelung eines erfindungsgemäßen Flurförderzeugs mit im Antriebsmotor integrierten Mitteln zur Erfassung der Geschwindigkeit,
- Figur 3: ein Schema der Verkabelung eines erfindungsgemäßen Flurförderzeugs mit vom Antriebsmotor unabhängigen Mitteln zur Erfassung der Geschwindigkeit.

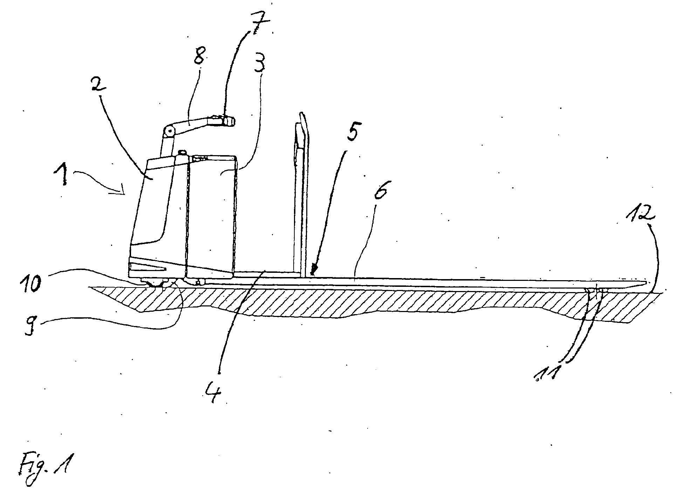

In Figur 1 ist als Beispiel eines erfindungsgemäßen Flurförderzeugs ein Niederhubkommisionierer 1 gezeigt. Hinter einem Antriebsteil 2 ist ein Batterieteil 3 und eine Fahrerplattform 4 angeordnet. Hinter der Fahrerplattform 4 befindet sich der Lastteil 5 mit den Lastaufnahmemitteln 6. Die Steuer- und Fahrbefehle werden über Bedienelemente 7, die in einer Deichsel 8 angeordnet sind, von einer Bedienperson vorgegeben. Der Antrieb erfolgt über ein Antriebsrad 9, das von einem hier nicht dargestellten Elektromotor angetrieben und über die Deichsel 8 gelenkt wird. Über beiderseits des Antriebsrades 9 angeordnete Laufräder 10 wird der Kommissionierer 1 seitlich abgestützt.

Bei unbeladenem Fahrzeug 1 oder wenn der Hauptteil der Last sich am Ende der Lastaufnahmemittel 6 nahe der Lastrollen 11 befindet, besteht bei Fahrzeugen nach dem Stand der Technik besonders bei abrupten Fahrmanövern eine erhöhte Gefahr, dass das Antriebsrad 9 zu viel Schlupf aufweist. Dies kann sowohl beim Beschleunignungsvorgang als auch beim Bremsen auftreten, sofern dieses, beispielsweise zur Energierückgewinnung, mittels des elektrischen Antriebs erfolgt.

Das Rad 9 dreht dann durch beziehungsweise blockiert. Auch beim Wechsel des Fahrbahnbelags kann es aufgrund eines dann niedrigeren Reibungskoeffizienten zwischen Rad 9 und Fahrbahn 12 zum Durchdrehen des Rades 9 kommen. Der Schlupf des Antriebsrades 9 führt zu erhöhtem Verschleiß des Rades 9 und zur Verschmutzung der Fahrbahn 12. Da über das Antriebsrad 9 auch die Lenkung des Kommissionierers 1 vorgenommen wird, reichen beim Durchdrehen des Antriebsrades 9 auch die Seitenführungskräfte des Rades 9 nicht mehr aus, um sicher zu lenken. Erhöht sich die Reibung zwischen Antriebsrad 9 und Fahrbahn 12 wieder schlagartig, beispielsweise durch andere Belastung des Rades 9 oder anderen Fahrbahnbelag, fasst das Rad 9 schlagartig wieder und es kommt zu einer stoßartigen Beanspruchung des Antriebsstrangs und des gesamten Flurförderzeugs 1. Diese Beanspruchung führt ebenfalls zu erhöhtem Verschleiß und kann zudem dazu führen, dass die Bedienperson den Halt verliert und vom Fahrzeug 1 stürzt oder unkontrollierte Fahrbefehle gibt.

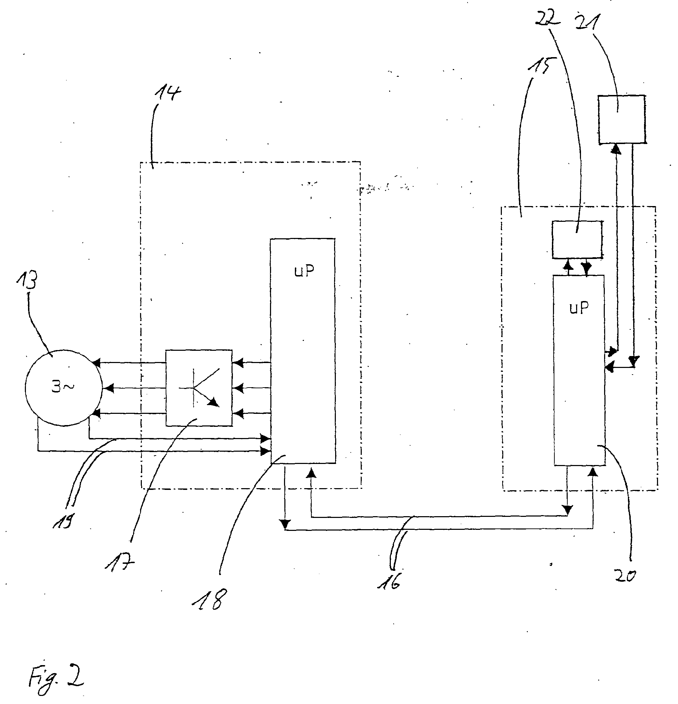

Der für das Verständnis der Erfindung relevante Teil der Verkabelung eines erfindungsgemäßen Flurförderzeugs 1 ist schematisch in Figur 2 dargestellt. Ein elektrischer Fahrantrieb, der im Ausführungsbeispiel als Drehstrommotor 13 ausgebildet ist, wird über eine elektrische Antriebssteuerung 14 mit Strom versorgt. Die elektrische Antriebssteuerung 14 steht mit einer elektrischen Fahrzeugsteuerung 15 in Wirkverbindung, die die gewünschte Fahrgeschwindigkeit und Fahrtrichtung vorgibt. Die Übermittlung erfolgt über Leitungen 16 mittels eines Bus-Systems, das den Austausch von Daten, beispielsweise über Betriebszustände und Fahrbefehle ermöglicht. Die elektrische Fahrzeugsteuerung erhält die Vorgaben über die von ihr zu steuernden Funktionen beispielsweise über die in Figur 1 dargestellten Bedienelemente 7, mit denen eine Bedienperson Fahrgeschwindigkeit- richtung vorgeben kann.

Die elektrische Antriebssteuerung 14 besteht im wesentlichen aus Verstärkungskomponenten 17 und einer Steuerungselektronik 18. In die elektrische Antriebssteuerung 14 integriert sind weiterhin hier nicht explizit dargestellte Messvorrichtungen, die die Ströme und Spannungen zur Versorgung des Elektromotors 13 überwachen. Die Steuerungselektronik 18 berechnet aus den von der elektrischen Fahrzeugsteuerung 15 vorgegebenen Geschwindigkeitswerten die Stromund Spannungswerte, mit denen der Elektromotor 13 zu versorgen ist, um die gewünschte Fahrgeschwindigkeit zu erreichen. Die Berechnung der Strom- und Spannungswerte geschieht nach einem der nach dem Stand der Technik für solche Aufgaben üblichen Berechnungsverfahren, im vorliegenden Beispiel anhand eines auf den verwendeten Elektromotor 13 abgestimmten Berechnungsmodells.

Im Elektromotor 13 integriert sind Mittel zur Erfassung der Drehzahl, woraus sich die Geschwindigkeit des Flurförderzeugs ermitteln lässt. Die Messwerte der Mittel zur Erfassung der Geschwindigkeit des Antriebs werden über Leitungen 19 an die Steuerungselektronik 18 übertragen. Diese Daten werden über das Bus-System des Flurförderzeugs auch an andere Komponenten, wie die Fahrzeugsteuerung 15, übermittelt. Ebenfalls über das Bus-System an die Fahrzeugsteuerung 15 übertragen werden die Eingangsströme und Spannungen des Elektromotors 13, die im vorliegenden Ausführungsbeispiel in der elektrischen Antriebssteuerung 14 erfasst werden. In der elektrischen Fahrzeugsteuerung 15 wird in einer erfindungsgemäßen Vorrichtung 20, beispielsweise einem Mikroprozessor, aus den Eingangsströmen und - spannungen des Elektromotors 13 dessen nach dem Berechnungsmodell zu erwartende Geschwindigkeit ermittelt. Erfindungsgemäß findet ein Vergleich mit der von dem Mittel zur Erfassung der Geschwindigkeit des Antriebs ermittelten Geschwindigkeitswerte statt. Auch ein Vergleich vom Bediener vorgegebener und gemessener sowie berechneter Geschwindigkeit wird vorgenommen. Die Daten über die Differenzen der Geschwindigkeitswerte werden über das Bus-System auch an andere Komponenten übertragen. Eine Signalvorrichtung 21 gibt bei Überschreiten eines vorgegebener Grenzwerte für eine der ermittelten Differenzen einen Wamhinweis an die Bedienperson ab. Der Warnhinweis kann nach dem Stand der Technik beispielsweise als akustisches oder optisches Signal erfolgen. Eine Aufzeichnungsvorrichtung 22 für Fahrzeugdaten, die im Ausführungsbeispiel in der Fahrzeugsteuerung 15 integriert ist, aber auch als separates Bauteil ausgeführt werden kann, speichert die Daten über die Differenzen zwischen den ermittelten Geschwindigkeitswerten. Dies ermöglicht es im Falle einer Störung oder eines Unfalls mögliche Ursachen zu erkennen. Insbesondere ist auf diese Weise einfach feststellbar, ob ein Fehler bei der Umsetzung der vom Bediener vorgegebenen Geschwindigkeitswerte in Strom- und Spannungswerte für den Antriebsmotor 13 oder bei der Umsetzung dieser Werte in die Bewegung der betroffenen Komponente vorliegt. Es sind damit weiterhin zeitliche Veränderungen der Differenz zwischen den ermittelten Geschwindigkeiten erfassbar, die sich beispielsweise durch Verschleiß der Komponenten ergeben. Diese Daten können bei der Wartung des Flurförderzeugs ausgelesen und gegebenenfalls Gegenmaßnahmen getroffen werden. Weiterhin können die Daten auch zur Anpassung des zur Berechnung der Drehzahl verwendeten Modells verwendet werden, so dass eine möglichst gute Übereinstimmung zwischen gewünschter und tatsächlicher Drehzahl erreicht wird.

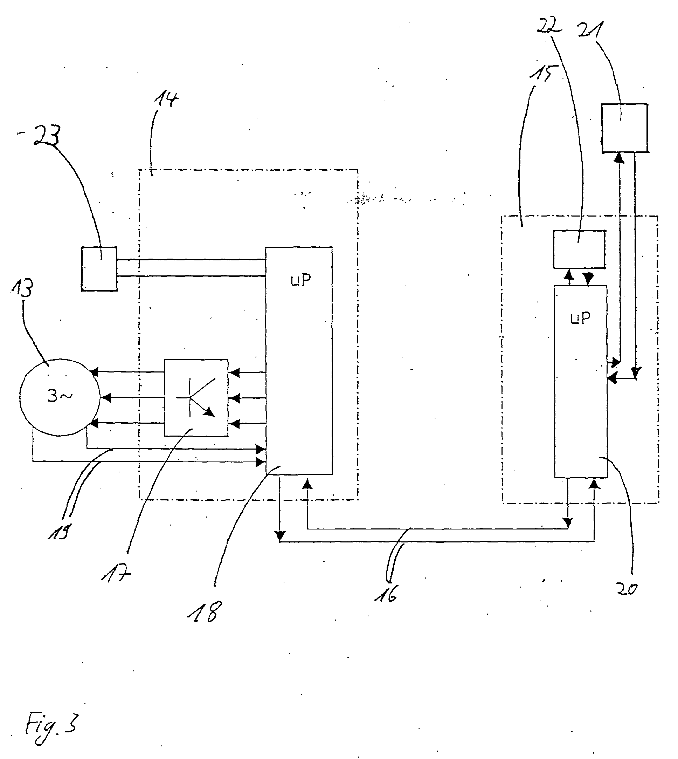

In einer weiteren Ausführungsform der Erfindung, die in Figur 3 dargestellt ist, sind die Mittel 23 zur Erfassung der Geschwindigkeit nicht im Motor integriert, sondern an anderer Stelle angeordnet, wo sie die reale Geschwindigkeit des Antriebs beziehungsweise der davon bewegten Komponente erfassen. Dies ist insbesondere von Vorteil, wenn auf dem Kraftübertragungsweg zwischen Antriebsmotor 13 und bewegter Komponente Schlupf auftritt, beispielsweise bei Reibkupplungen, insbesondere aber bei einem Fahrantrieb zwischen Antriebsrad 9 und Fahrbahn 12. Der Vergleich von berechneter und gemessener Geschwindigkeit ermöglicht es, den Schlupf zu ermitteln, der bei der Übertragung der Antriebskraft auftritt und bei Überschreiten eines vorgegebenen Maßes Gegenmaßnahmen einzuleiten, insbesondere eine Reduzierung der Motordrehzahl bei Beschleunigungsvorgängen beziehungsweise eine Erhöhung der Drehzahl bei Bremsvorgängen. Dadurch wird die Beanspruchung der Komponenten wesentlich reduziert. Im Ausführungsbeispiel kann so durch an einem der Laufräder 10 angebrachte Geschwindigkeitssensoren 23 ermittelt werden, ob das Antriebsrad die Haftung verloren hat. Dieser Zustand ist hoch gefährlich, da bei Flurförderzeugen die Antriebsräder üblicherweise auch zur Lenkung des Fahrzeugs verwendet werden und bei Verlust der Haftreibung diese Funktion nicht mehr wahrnehmen können. Daher wird bei Überschreiten eines als für die Sicherheit des Flurförderzeugs 1 kritischen Grenzwertes der Differenz zwischen berechneter und gemessener Geschwindigkeit ein Warnhinweis abgegeben und geeignete Maßnahmen eingeleitet, um wieder einen sicheren Zustand herzustellen. Geeignete Gegenmaßnahme sind bei Beschleungigungsvorgängen ein Zurückregeln des Antriebsmotors 13 und bei Bremsvorgängen mit Motorbremse eine Reduzierung der Bremswirkung des Antriebsmotors 13.

Neben den in den Ausführungsbeispielen gezeigten Ausbildungen der Erfindung sind selbstverständlich weitere Ausführungsformen möglich. Insbesondere ist die Verwendung der Erfindung in größeren Flurförderzeugen, wie beispielsweise Gegengewichtsgabelstaplem, bei denen hohe Antriebsgeschwindigkeiten erreicht werden, von besonderem Vorteil.

## Patentansprüche

1. Flurförderzeug mit mindestens einem elektrischen Antrieb (13), mindestens einer elektrischen Antriebssteuerung (14) und einem Mittel (23) zur Erfassung der Geschwindigkeit des Antriebs (13), **dadurch gekennzeichnet, dass** eine Vorrichtung (20) zum Vergleich zwischen mindestens einem berechneten und mindestens einem gemessenen Geschwindigkeitswert des Antriebs (13) vorgesehen ist.

2. Flurförderzeug nach Anspruch 1, **dadurch gekennzeichnet, dass** die Vorrichtung (20) zum Vergleich zwischen einer berechneten und einer gemessenen Geschwindigkeit des elektrischen Antriebs (13) als von der elektrischen Antriebssteuerung (14) unabhängiges Bauteil ausgebildet ist.

3. Flurförderzeug nach Anspruch 1 oder 2, **dadurch gekennzeichnet, dass** die Geschwindigkeit des elektrischen Antriebs (13) aus den Eingangsströmen und Eingangsspannungen des elektrischen Antriebs (13) berechnet wird.

4. Flurförderzeug nach einem der Ansprüche 1 bis 3, **dadurch gekennzeichnet, dass** Mittel zur Erfassung der Eingangsströme und Eingangsspannungen des elektrischen Antriebs (13) vorhanden sind.

5. Flurförderzeug nach einem der Ansprüche 1 bis 4, **dadurch gekennzeichnet, dass** von der Vorrichtung (20) ein Vergleich von mindestens einem berechnetem und/oder mindestens einem gemessenen Geschwindigkeitswert mit mindestens einem durch Bedienelemente (7) vorgegebenen Geschwindigkeitswert des Antriebs (13) und/oder einer von dem Antrieb (13) bewegten Komponente vomehmbar ist.

6. Flurförderzeug nach einem der Ansprüche 1 bis 5, **dadurch gekennzeichnet, dass** Daten über die Differenzen zwischen berechneter, gemessenen und vorgegebenen Geschwindigkeiten an andere Komponenten (21) des Flurförderzeugs (1), vorzugsweise über ein Netzwerk- oder Bus-System, übermittbar sind.

7. Flurförderzeug nach einem der Ansprüche 1 bis 6, **dadurch gekennzeichnet, dass** beim Überschreiten einer vorgegebenen Differenz zwischen mindestens zwei von der Vorrichtung (20) erfassten Geschwindigkeiten geeignete Maßnahmen, insbesondere eine Reduzierung der Drehzahl des elektrischen Antriebs (13), zur Verringerung dieser Differenz durchführbar sind.

8. Flurförderzeug nach einem der Ansprüche 1 bis 7, **dadurch gekennzeichnet, dass** bei einer für die Sicherheit des Flurförderzeugs (1) kritischen Differenz zwischen berechneter und gemessener Geschwindigkeit geeignete Maßnahmen, insbesondere Wamhinweise oder eine Reduzierung der Antriebsleistung, zur Wiederherstellung der Sicherheit durchführbar sind.

9. Flurförderzeug nach einem der Ansprüche 1 bis 8, **dadurch gekennzeichnet, dass** der elektrische Antrieb (13) ein Fahrantrieb ist.
